# EUROPEAN PATENT SPECIFICATION

(11) **EP 4 572 604 B1**
(45) Date of publication and mention of the grant of the patent: **24.12.2025**
(21) Application number: 23798851.4
(22) Date of filing: 25.08.2023
(51) Int. Cl.: A01K 75/00, B63C 11/52

(54) **A DEVICE FOR REPAIRING HOLES AND/OR TEARS IN A NET**
VORRICHTUNG ZUR REPARATUR VON LÖCHERN UND/ODER RISSEN IN EINEM NETZ
DISPOSITIF DE RÉPARATION DE TROUS ET/OU DE DÉCHIRURES DANS UN FILET

(30) Priority: 26.08.2022 NO 20220919
(43) Date of publication of application: 25.06.2025
(73) Proprietor: NJORD SYSTEMS AS, 5470 Rosendal (NO)
(72) Inventor: LERNES, Øyvind, 5470 Rosendal (NO)
(74) Representative: Acapo AS
(86) International application number: PCT/NO2023/060036
(87) International publication number: WO 2024/043788

(56) References cited:
- WO-A1-2015/147650
- CN-A- 101 724 976
- CN-A- 108 477 084
- CN-A- 110 696 015
- KR-B1- 101 190 851
- NO-B1- 337 330

## Description

The present invention relates to a device for repairing holes and/or rifts (tears) occurring in a net or an equivalent.

The present invention also comprises a method for use of a device for repairing holes and/or rifts occurring in a net or an equivalent.

Fish escaping from fish farms has been a major concern for the fish farming industry for many years. It carries with it monetary loss, unwanted genetic consequences, and a contamination risk for wild salmon, as well as creating reputation issues for the industry.

There are several reasons for why fish escape from these facilities, such as a top of a fish net cage being submerged under water, damage to nets caused by bad weather conditions, through cleaning or mooring of the nets, or vessels coming in contact with the nets via the propeller during operational situations.

Also, the net may come into contact with a bottom ring or a weight in the net cage during strong currents, when handling the weights, or through equipment in the net cage, such as dead fish pumps, lights, cameras, etc.

Today, these holes and/or rifts in nets are discovered through visual inspections with divers or ROVs, where these are time-consuming methods with prolonged response times, and which also may cause an oversight in detecting holes and/or rifts, leaving them undetected over time.

Usually, the first inspection is carried out through ROV, and when the inspection is concluded and holes and/or rifts are uncovered, one or more divers are sent down to repair the holes and/or rifts in the net.

NO 337330 B1 comprises a method and a device for handling of a rift occurring in a net, where a support element containing a plurality of barbed elements extending outwards from one side of the support element is inserted over the rift, so that this will, partly or in whole, become covered by the support element, making sure that the threads in the net around the rift hook to the barbed elements.

US 6.353.982 B1 comprises a method and a device for repairing a damaged area of a net which is used for limiting movement. Aluminum or steel fixing hooks, with a strength equal to or greater than the net material, are secured to the ends of a rope or another material of a suitable size, which will create a bridge device. The fixing hooks are designed with a thickness and with a radius surface, prohibiting any cutting of the net. The damaged area is isolated, and the bridge device is fixed in a position of the damaged area, thereby replacing and maintaining the properties of the net.

CN 110696015 A comprises a method and net box repairing device, comprising ROV body that is provided with six thrusters, two are vertically installed, and four vector thrusters that are horizontally installed, so that the ROV body realizes six degrees of freedom movement and a rectangular frame that is connected by two hydraulic rods. There is also disclosed a rectangular frame that is a cage fixing device. During operation the cage fixing device can move to the demaged area of a cage through the expansion and contraction of the hydraulic rod that is tighten and fixed. The ROV body also discloses a camera, a floating body and a seated cabin.

As such, a need is present for an alternative to today's solutions for net repair and corresponding actions, or at minimum supplementary devices and/or solutions.

The purpose according to the present invention is to provide a device for repair of holes and/or rifts in a net or something corresponding, which would be easy to produce and operate.

It is also a purpose according to the present invention to provide a device that is gentle when used, so that fish in a fish farming net cage are not subject to damage or other adverse effects.

It is also an objective according to the present invention to provide a method for use of a device for repair of holes and/or rifts occurring in a net or something corresponding.

It is also an objective according to the present invention to provide a device that is more cost effective.

Furthermore, it is also an objective according to the present invention to provide a device that can be deployed as a permanent or temporary solution.

These objectives are achievable according to the present invention with a device for repair of holes and/or rifts in a net or something corresponding, and a method for use of a device for repair of holes and/or rifts occurring in a net as defined in the independent claims 1, 10, 14 and 15. Further embodiments of the invention are defined in the dependent claims.

The present invention comprises a device for repair of holes and/or rifts occurring in a net where the device comprises a main part and a release part that are connected to each other through an activation element, where the release part comprises a stem and a head part and the activation element is releasably connected to the stem of the release part, such that the main main part is formed with a through hole, where the through hole over a part of its length is designed with a first diameter, and over another a part of its length is designed with a second diameter, and where a part of the stem is provided in the part of the through hole that is provided in the main part and formed with the second diameter.

The device for repair of holes and/or rifts occurring in a net or something corresponding can be designed to cover larger or smaller holes and/or rifts in a net or something corresponding.

The device for repair of holes and/or rifts occurring in a net or something corresponding can in one embodiment be manufactured by a plastic material, and can be designed to possess a neutral buoyancy. However, it must be understood that the device can also be designed to possess a slightly negative or slightly positive buoyancy, which will prohibit that the device, during use, will cause further stress on the net or something corresponding.

In one embodiment, the device for repair of holes and/or rifts in a net or something corresponding can be designed in a plastic material, where the device furthermore can be designed to possess a neutral buoyancy. However, one may envision that the device for repair of holes and/or rifts in a net or something corresponding can be designed by other materials, such as composite materials, light metal or something corresponding, and that the device furthermore also can be manufactured by several types of materials.

According to one aspect, the main part and/or release part be designed in a flexible material, allowing the device for repair of holes and/or rifts in a net or something corresponding a certain degree of movement in relation to the net or something corresponding in its activated and locked condition.

In one embodiment, the main part of the device can be designed with a shape which will prevent damage to the fish through conventional use of the device, for example as a substantially half-sphere, without sharp edges and/or surfaces. However, one may also note that the main part may also possess other shapes, such as a square shape, oval shape, etc.

The length of the first diameter can, in one embodiment, be identical to the length of the second diameter, but one may also note that the length of the first diameter and the length of the second diameter can be different, for example the length of the first diameter being longer than the length of the second diameter.

According to one aspect, the first diameter can be greater than the second diameter.

In one embodiment, a fitting between the first diameter and the second diameter can create a shoulder internally in the through hole provided in the main part, where the shoulder creates a contact surface or "locking surface" for a locking device formed with clamp fingers.

In one embodiment, a surface of the main part can be formed with a recess or equivalent, where the recess or equivalent is provided in connection with the through hole running through the main part.

The release part can, in one embodiment, comprise a stem, in which the stem in one embodiment can comprise a head part. The stem and the head part can be integrated into each other, or they can consist of two separate elements that under conducive conditions can be connected to each other.

When the device for repair of holes and/or rifts in a net or equivalent has been assembled, a part of the stem will be provided in the part of the through hole that is provided in the main part formed with the second diameter.

In order to prevent a rotation of the release part and the main part relative to each other, the stem and the main part can be formed with guiding grooves or equivalent. In one embodiment, the stem may be formed with one or more guiding grooves extending along an axial length of the stem, while the through hole in the main part can be formed with a corresponding plurality of cooperating projections, pins or equivalent. The guiding groove must necessarily be formed with a length greater than a length of the projection, the pin or equivalent, in order to allow for the release part to be moved from and towards the main part in a direct motion.

The guiding groove(s) may also function as stop devices for the release part, in order to ensure that the release part cannot be pushed too far away from the main part, so that the release part is released from the main part in full.

An activation element is, in a conducive way, releasably connected to the stem of the release part, where the activation element is released and removed from the device for repair of holes and/or rifts in a net or equivalent, when the device is activated and safely secured to the net or an equivalent.

In one embodiment, the stem may possess a cylindrical shape. However, the stem may conceivably come in other shapes, for example an oval shape, a multiangular shape, etc.

According to one aspect, the main part of the stem can be formed with a plurality of wall elements, for example four wall elements, in which the wall elements are provided perpendicularly vis-à-vis each other, meaning two adjacent wall elements creating a 90-degree angle in relation to each other. By shaping the wall elements that constitute a 90-degree angle in relation to each other, it will result in the net or equivalent being, to a lesser degree, subject to motion relative to the device for repair of holes and/or rifts when the device has been activated and locked to the net, as two grip-hooks will prohibit a movement in one direction (for example a x-direction in a x-y-plane), while two other grip-hooks will prohibit a movement in another direction (for example a y-direction in the same a x-y-plane). Each wall element may furthermore be formed to create a fastening- and rotation point for a grip-hook, in which the number of grip-hooks, when the device for repair of holes and/or rifts in a net or equivalent is mounted on the net or equivalent in order to "close" the hole and/or the rift, will be connected with an adjacent surface of the main part, in order to "lock" the net or equivalent between the main part and the release part.

As such, both each wall element and each grip-hook can, in one embodiment, be formed with a through hole, where the wall element and grip-hook can be connected to each other through a connection arrangement, for example a bolt and nut, a lock mandrel, a cotter pin, a male- and female connection or equivalent. The connection arrangement can, in one embodiment, be formed so that it allows for rotation of each grip-hook relative to respective wall elements.

An upper part of the head element can furthermore be formed with a surface preventing any further rotation of each grip-hook beyond a certain angle. In one embodiment, the upper part of the head element may be formed to allow a 90-degree movement of the grip-hooks.

Before the device for repair of holes and/or rifts in a net or equivalent can be deployed, the grip-hooks in the release part will be provided in an inactive state of the device, as the grip-hooks then will be rotated to a position where they substantially run parallel to the stem of the release part, in other words, along a longitudinal length of the device. In this position, an outer end of the grip-hooks will be engaged with a main part surface, causing the grip-hooks to be "locked" and kept in this position. When the device for repair of holes and/or rifts is to be deployed, the release part is guided through the hole and/or rift subject to repair, whereupon the release part, aided by the activation element, is pushed away a distance from the main part. When the grip-hooks is pushed out of a contact position with the surface of the main part, a tensioning device will cause the grip-hooks to rotate around the fastening- and rotation point in the wall elements, being brought out into an active condition. The surface formed on the upper part of the head element will thus stop the rotation of the grip-hooks and hold the grip-hooks in this position. The release part will then, aided by the activation element, retract towards the main part again, so that the active or inactive grip-hooks are brought in contact with the net or equivalent, as well as the surface of the main part. A locking device provided in connection with the stem of the activation element, where an end part of the locking device is formed with clamp fingers, will follow the movements of the release part towards the main part, until the clamp fingers of the locking device pass by the shoulder created in the connection between the first and the second diameter in the through hole in the main part, whereupon the clamp fingers, due to the flexibility of the locking device, will "jump" out and cause the release part to lock in with the main part in this position.

According to one embodiment, a part of the grip-hooks can be provided within a recess, groove or an equivalent formed in connection with the through hole in the main part, when the device for repair of holes and/or rifts in a net or equivalent is in its inactive state. According to one aspect, each grip-hook over at least a part if its surface be formed with a fluted or grooved surface, in which the fluted or grooved surface can be in the shape of a plurality of knobs, cogs, grooves, slots or equivalent. An end of each grip-hook, on the opposite side of where the through hole creating the fastening- and rotation point, can furthermore be formed with a trimming.

In a corresponding manner, a surface of the main part can be formed with a plurality of corresponding knobs, cogs, grooves, slots or equivalent as shaped o the grip-hooks, for interaction with the grip-hooks.

The ends of the grip-hooks formed with the trimmings will then be held fixed by the knobs, cogs, grooves, slots or equivalent, shaped on the main part when the grip-hooks are provided in an inactive state of the device for repair of holes and/or rifts.

The fluted or grooved surface of the grip-hooks and/or the main part may furthermore be covered by a friction-generating film, in order to prevent the net or equivalent from sliding relative to the device for repair of holes and/or rifts in a net or equivalent when the device is activated and locked in its operational condition.

The locking device can, in one embodiment, be formed with a plurality of clamp fingers placed at a distance from each other. One or more clamp fingers may be formed with a projection extending radially in one direction, creating a contract surface of the shoulder provided in the main part. The one or more projections will, when the release part and locking device have been retracted so far back towards the main part that the clamp fingers pass the shoulder formed in the connection between the first and the second diameter in the through hole in the main part, be allowed to "jump" outwards radially (due to the greater diameter in the through hole), causing the projection or projections to be brought in contact with the shoulder. The device will now be in an activated and locked condition, as the cooperation between the projection or projections and the shoulder in the through hole in the main part will prevent the release part from moving away from the main part. The release part can also not be moved further towards the main part, as the grip-hooks already have been brought in contact with the main part.

The device for repair of holes and/or rifts in a net or equivalent can comprise an activation element releasably connected to the release part, where a ROV equipped with a manipulator arm can utilize the activation element to activate the device, meaning bringing the device from an inactive status to an active status. When the device has been activated and locked in the active status, the activation element will be released and removed from the device.

The activation element can, in one embodiment, be connected to the stem of the release part.

The present invention also involves a method for repairing holes and/or rifts in a net or equivalent by using a ROV, where the method comprises the following:
- equipping the ROV with a manipulator arm adapted to bring a device for repair of holes and/or rifts in a net or equivalent from an inactive status to an active status,
- connecting the manipulator arm to the device for repair of holes and/or rifts,
- maneuvering the ROV to an already discovered hole and/or rift in a net or equivalent,
- utilizing the manipulator arm to guide a release part of the device through the hole and/or rift in a net or equivalent,
- pushing an activation element into a main part of the device with the manipulator arm, to initially activate the release part and then retract the activation element towards a main part in order to lock the release part in a locked position with the main part, and,
- retract the actuator element from the device.

The method can furthermore comprise, following the step of guiding the release part through the hole and/or rift in the net or equivalent, but prior to the step of utilizing the manipulator arm to push in the activation element, a step of guiding the release part further a distance past the hole and/or rift, in order to ensure that the release part is at a sufficient distance from the net or equivalent, for as complete activation of the grip-hooks of the release part.

The method can furthermore comprise a step of carrying out a manual inspection of the device when the release part and the main part are locked into each other, in order to check whether the device for repair of holes and/or rifts in a net or equivalent is covering the hole or rift, as well as if the device is locked.

The present invention also comprises a method for removal of a device for repair of holes and/or rifts in a net or equivalent when the device is locked, where the method comprises the following:
- sending down a diver equipped with suitable tools for the device to be removed,
- pushing in the tool in a through hole provided in a main part of the device,
- disengaging a release part from a main part,
- folding in the release part to an inactive position,
- guiding the release part through and out of the hole and/or rift in the net or equivalent, and
- removing the device from the hole and/or rift in the net or equivalent.

The method of removal of the device for repair of holes and/or rifts in a net or equivalent can further comprise, after the step of disengaging the release part from the main part, but prior to folding in the release part to an inactive position, a step of pushing the release part further away from the main part, in order to ensure that the release part is in a sufficient distance from the main part so that the grip-hooks of the release part can be folded in.

Other advantages and distinctive features of the invention will be conveyed clearly from the following detailed description, the enclosed drawings, as well as the subsequent claims, where
Figure 1 shows a device for repair of holes and/or rifts in a net or equivalent according to the present invention, prior to the device being fastened in the net or equivalent, where the left section shows the device from the side, while the right section shows the device from the side and in a cross-section,
Figure 2 shows the device according to figure 1, where the device is partly guided through the hole and/or rift in the net or equivalent, and released, where the left section shows the device from the side, while the right section shows the device from the side and in a cross-section,
Figure 3 shows the device according to figure 1 in a fully released condition, where the left section shows the device from the side, while the right section shows the device from the side and in a cross-section,
Figure 4 shows the device according to figure 1, where the device has been brought to a locked position with the net or equivalent, where the left section shows the device from the side, while the right section shows the device from the side and in a cross-section,
Figure 5 shows the device in a perspective outline in a locked position, seen slanted from above and from below,
Figure 6 is an exploded view of the device for repair of holes and/or rifts in a net or equivalent, according to the present invention, and
Figure 7 shows the device for repair of holes and/or rifts in a net or equivalent from above, locked in its active position,

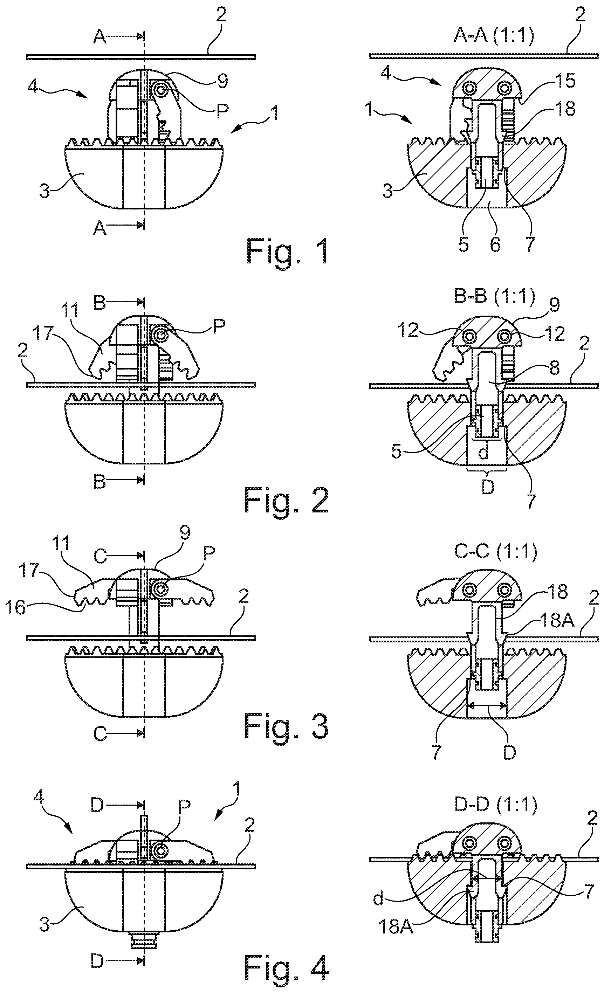

Figure 1 shows a device 1 for repair of holes and/or rifts in a net 2 or equivalent according to the present invention, where the device 1 for repair of holes and/or rifts in a net 2 or equivalent is aligned to be mounted to the net 2 or equivalent, so that the hole and/or rift is covered.

When a diver or a ROV, either through a routine survey or an inspection upon suspicion of holes in a net 2 in a fish farm cage, has uncovered the presence of one or more holes and/or rifts in the net 2, a ROV will be equipped with the device 1 for repair of holes and/or rifts in a net or equivalent, in order to lower the device 1 for repair of holes and/or rifts in a net or equivalent to the hole and/or rift, and then fasten the device 1 for repair of holes and/or rifts in a net or equivalent to the net 2 or the net in the fish farm cage.

The device 1 for repair of holes and/or rifts in a net or equivalent comprises a main part 3 and a release part 4, where an activation element 5 in a suitable manner is releasably connected to the release part 4.

On figure 1, the device 1 for repair of holes and/or rifts in a net or equivalent is shown in an inactive position, so that the release part 4 of the device 1 can be guided through the hole or rift in the net 2.

The main part 3 comprises a semi-spherical shaped element formed with a through hole 6, where the through hole 6 over a part of its length has a first diameter D and a second part of its length has a second diameter d. The first diameter D is greater than the second diameter d forms a shoulder 7 or contact surface internally in the main part 3.

The release part 4 comprises a cylindrical stem 8, which in a suitable manner is connected to or integrated with a head part 9.

The head part 9 is further formed with four wall elements 10 provided perpendicularly vis-à-vis each other, where each of the four wall elements 10 create a fastening- and rotation point P for a grip-hook 11.

Each wall element 10 is furthermore formed with a through hole 13, where this through hole forms a fastening- and rotation point P for a grip-hook 11.

Each grip-hook 11 will, in an area close to one of its own ends, be formed with a through hole 13, so that wall element 10 and grip-hook 11 can be connected to each other through a connection arrangement 14, for example a bolt and nut, a lock mandrel, a cotter pin, a male- and female connection or equivalent, where the connection arrangement 14 is formed in such a manner that it allows a rotation of the grip-hook 11 in relation to the wall element 10, when the grip-hook 11 is connected to the wall element 10.

a fastening arrangement 20, for example in the form of a spring, is furthermore provided and connected between the wall element 10 and grip-hook 11, and provided in such a manner that when the grip-hooks 11 are in an inactive state of the device 1, the grip-hooks 11 will thus be "tensioned" so that the grip-hooks 11 can be rotated out to its fully released condition when the release part 4 of the device 1 is activated. In such an inactive condition, the grip-hooks 11 are rotated to a position in which they run mainly parallel with the stem 8 of the release part 4, along a longitudinal length of the stem 8.

An upper part of the head part 9 is formed with a radially extending surface 15, which creates an edge around the circumference of the stem 8, which in turn will prevent any further rotation of the grip-hooks 11 when these are released. On figure 1, the radially extending surface 15 is shown formed in order to allow a 90-degree rotation of the grip-hooks 11, see also figures 1 and 3.

Each grip-hook 11 is furthermore, in an opposite end of the through hole 13, formed with a grooved surface 16, where the grooved surface 16 is formed to cooperate with a grooved surface 16 provided on a surface of the main part 3 facing the release part 4 when the main part 3 and the release part 4 is connected to each other.

The grooved surface 16 on the grip-hook 11 and the main part 3 can be in the shape of a plurality of knobs, cogs, grooves, slots or equivalent, to provide a secure locking between the release part 4 and the main part 3 when the device 1 is locked in its active condition.

The knobs, cogs, grooves, slots or equivalent forming the grooved surface 16 on the grip-hook 11 are shown to run in a transverse direction of the axial longitudinal direction of the grip-hook 11. It should be understood, however, that the knobs, cogs, grooves, slots or equivalent forming the grooved surface 16 on the grip-hook 11 can also be formed to run in the axial longitudinal direction of the grip-hook 11, or be formed to create an angle with the axial longitudinal direction of the grip-hook 11.

The grooved surface 16 provided on the grip-hook 11 and the main part 3 is further adapted to the pole length or mesh width of the net 2, the thread thickness etc. of the net 2 with which the device 1 is to be utilized, so that threads in the net 2 will be able to be placed in the grooves of the grooved surface 16 provided on the surface of the main part 3. The knobs or cogs provided in the grooved surface 16 by each grip-hook 11 will, when the device 1 for repair of holes and/or rifts in a net or equivalent is locked in its active position, covering the hole and/or rift in the net 2, bear against the thread of the net 2 and the knobs or cogs provided in the grooved surface of the main part 3, so that a movement of the net 2 relative to the device 1 for repair of holes and/or rifts in a net or equivalent can be prevented to a significantly greater degree.

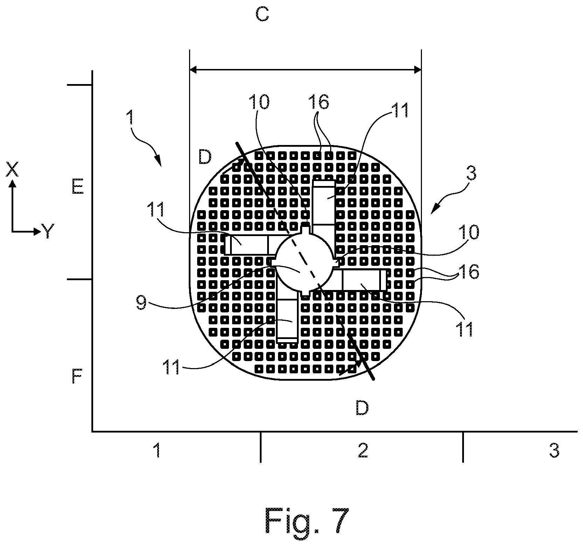

The above stated design of the device 1 for repair of holes and/or rifts in a net or equivalent will therefore, to a significantly greater degree, prevent that threads around the hole and/or rift in the net 2 or equivalent will be subject to stress and strain which in turn can cause that the hole and/or rift will become bigger. Figure 7 shows the device 1 for repair of holes and/or rifts in a net or equivalent, seen from above, where the device 1 for repair of holes and/or rifts in a net is locked in its active position, covering the hole and/or rift in the net 2, where one can observe that two adjacent grip-hooks 11 are provided perpendicularly to each other, which will prevent or lessen a significant movement of the net 2, relative to the device 1 in a X-Y plane.

In such an embodiment, the device 1 for repair of holes and/or rifts in a net or equivalent be provided so that rotational movement between main part 3 and release part 4 is denied. Release part 4 can then only be moved straightforward from and towards the main part 3.

Such an embodiment will precipitate threads in the net 2 to be subject to a lesser degree of stress and strain when the device 1 is used for repair of holes and/or rifts, as the grooved surface 16 provided in the grip-hooks 11 and the main part 3 will cause the threads in the net 2 to lock up and fastened between the grooved surfaces in the grip-hooks 11 and the main part 3, so that the threads in the net 2 are only allowed a minor movement relative to the device 1 for repair of holes and/or rifts in a net or equivalent.

Each grip-hook 11 is furthermore designed with a trimming 17 also designed to cooperate with the grooved surface 16 provided on the surface of the main part 3, so that each grip-hook 11 will be "restrained" by the main part 3 when the device 1 for repair of holes and/or rifts in a net or equivalent is in an inactive state, as shown in figure 1.

In such an inactive state of device 1 for repair of holes and/or rifts in a net or equivalent, the grip-hooks 11 will be rotated to a position where they run substantially parallel with the stem 8 of the activation part 4, along a longitudinal length of the device 1 for repair of holes and/or rifts in a net or equivalent. In this state, the trimming 17 of each grip-hook 11 be in contact with the grooved surface 16 in the main part 3.

A locking device 18 is furthermore provided in or around the stem 8 of the activation part 4, and suitably connected to this, where an end of the locking device 18 is designed with a plurality of clamp fingers 18A. The clamp fingers 18A are designed with a projection 18B, extending radially outwards, creating a contact surface of the shoulder 7, provided in the transition between the first and second diameter in the through hole 6 in the main part 3.

The clamp fingers 18A are furthermore designed to be elastic, where the clamp fingers 18A will eject to a construction with the shoulder when the projection 18B of the clamp fingers 18A is lead past the shoulder 7, enabling the release part 4 to be locked to the main part in this position.

The projection 18B of the clamp fingers 18A is furthermore designed with a slant in an axial direction of the locking device 18, where the slant runs from one end of the clamp fingers 18A and sloped upwards towards the projection 18B, forming a tapered end top in the locking device 18.

The above-described arrangement of the locking device 18 will mean that a suitable tool (not shown) can be utilized to bring the device 1 for repair of holes and/or rifts in a net or equivalent to an unlocked state. When the device 1 is to be removed, a diver possessing a suitable tool will be sent down to the device 1 for repair of holes and/or rifts in a net or equivalent, whereupon the diver will insert the tool into the through hole 6 provided in the main part 3 of the device 1 for repair of holes and/or rifts in a net or equivalent, and then push in the tool. When the tool is pushed in towards the main part 3, one end of the tool will be brough into contact with the clamp fingers 18A of the locking device 18. By continuing to push the tool further inwards in the main part 3, the tool, due to the slant of the clamp fingers 18A, push the clamp fingers inwards towards the center of the through hole 6, causing the projection 18B to be brought out of contact with the shoulder 7 provided in the transition between the first and second diameter in the through hole 6 in the main part 3. When the tool has been pushed in so far into the main part 3 that the projection 18B of the clamp fingers 18A has been brough out of contact with the shoulder 7, the release part 4 can be pushed away from the main part 3, which will cause the grip-hooks 11 to come out of contact with the main part 3. When the release part 4 has been pushed a certain distance away from the main part 3, the diver will be able to "fold" in the grip-hooks 11 against the stem 8 of the release part 4 once again. In this position of the grip-hooks 11 (meaning the position where the grip-hooks 11 are provided to run along the stem 8), the diver will then push the release part 4 back towards the main part 3 in order to lock and fasten the release part 4 against the main part 3. When the grip-hooks 11 are "folded" back towards the stem 8 of the release part 4, the tensioning device 20 will be tightened again, so that device 1 for repair of holes and/or rifts in a net or equivalent is ready for use. The device 1 for repair of holes and/or rifts in a net or equivalent can then be withdrawn from the hole and/or rift in the net or equivalent, and be removed by the diver.

Figure 2 shows that the release part 4 of the device 1 for repair of holes and/or rifts in a net or equivalent is lead through a hole and/or rift in the net 2, and a distance further past the hole and/or rift, whereupon the release part 4, aided by the activation element 5, has been pushed away from the main part 3 in order to release the grip-hooks 11.

On the figure, the release part 4 has been pushed so far away from the main part 3 that the grip-hooks 11 has been brough out of contact with the grooved surface 16 in the main part 3. In this position, the grip-hooks 11 have been released and the tensioning device 20 will cause each grip-hook 11 will begin to rotate around the fastening- and rotation point P provided in the respective wall element 10.

Figure 3 shows that the grip-hooks 11, through the tensioning device 20, have rotated 90 degrees in relation to its inactive status, where the radially extending surface 15 of the head part 9 prevents a further rotation of the grip-hooks. In this position, the grip-hooks 11 are in its fully released condition.

When the grip-hooks 11 have been brought to its fully released condition, the release part 4, aided by the activation element 5, will be retracted back towards the main part 3 again to bring the fully released grip-hooks 11 in contact with the net 2 and the main part 3. The locking device 18 will thus follow the movement of the release part 4 inwards toward the main part 3, and the clamp fingers 18A will be guided towards the shoulder 7 formed in the connection between the first and the second diameter by the through hole 6 in the main part 3. When the clamp fingers 18A pass the shoulder 7, the clamp fingers 18A will move radially outwards, where the projection 18B of the clamp fingers 18A are brough into contact with the shoulder 7, which will fasten the release part 4 to the main part 3. In the locked position of the release part 4 and the main part 3, the grip-hooks 11 will also be in contact with the grooved surface 16 of the main part 3, and threads in the net 2 will be provided in the grooves of the grooved surface 16 of the release part 4 and the main part 3.

Figure 4 shows the device 1 for repair of holes and/or rifts in a net or equivalent being connected to the net 2 and also being in a locked position.

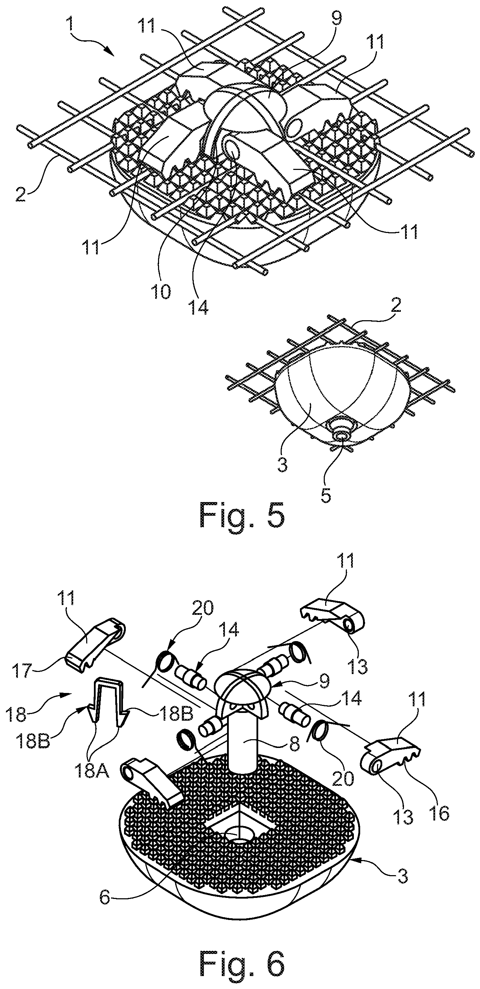

Figure 6 is an exploded view of the device 1 for repair of holes and/or rifts in a net 2 or equivalent, where one can observe that the connection device 14 in the form of a rapid coupling sleeve is formed in that one end of the rapid coupling sleeve 14 can be fastened to the through hole 13 provided in the wall element 10, while an opposite end of the rapid coupling sleeve 14 can be fastened to the grip-hook 11, through the through hole 13 provided in the grip-hook 11.

The abovementioned and above-described fastening of the grip-hook 11 to the wall element 10 will cause that each grip-hook 11 is allowed to rotate around the fastening- and rotation point P, from an inactive and collapsed position, to an active and released position.

A tensioning device 20 in the form of a spring is furthermore provided between each grip-hook 11 and each wall element 10, where the spring is formed so that it will be fully tensioned when the grip-hook 11 has been brought to its inactive and collapsed position, as shown in figure 1, where the trimming 17 of the grip-hook 11 has been engaged with the grooved surface 16 provided in the main part 3. In this inactive and collapsed position, the grip-hooks 11 will be "retained" by the main part 3.

The main part 3 is furthermore formed with a recess 12, groove or equivalent, in which a part of the grip-hooks 11 can be provided when the device 1 for repair of holes and/or rifts in a net or equivalent is in its inactive position.

When the device 1 for repair of holes and/or rifts in a net 2 or equivalent is to be activated, the activation element 5, which in a suitable manner has been releasably connected with the stem 8 of the release part 4, will be utilized to push the release part 4 away a distance from the main part 3. When the release part 4 has been pushed away sufficiently from the main part 3, it will cause the trimmings 17 of the grip-hooks 11 to be brought out of engagement with the grooved surface provided on the main part 3. When the grip-hooks 11 have been brought out of engagement with the main part 3, the tensioning device 20 will push out the grip-hooks 11, so that each grip-hook 11 will rotate around its fastening- and rotation point P until the grip-hooks 11 are brought into contact with the radially extending surface 15 formed on the head part 9. The radially extending surface 15 will prevent a further rotation of the grip-hooks 11, and the grip-hooks 11 will then be in its fully released position.

When the grip-hooks 11 are in its fully released position, as shown in figure 3, the activation element 5 will again be utilized to pull the release part 4 towards the main part 3. The locking device 18, which in a suitable manner is connected with the stem 8 of the release part, will follow the movement of the release part 4, and when the clamp fingers 18A of the locking device 18 have been brought past the shoulder 7 provided in the through hole 6 in the main part, the clamp fingers 18A will be rotated or pushed radially outwards (due to its flexibility) so that the projection 18B formed on the clamp fingers 18A are brought into contact with the shoulder 7, to then lock the main part 3 to the release part 4. In this position, the release part 4 cannot be pushed away from the main part 3, as the projection 18B, extending radially outwards, is in contact with the shoulder 7.

The shoulder 7 is formed in the connection between the first diameter D and the second diameter d of the through hole 6 in the main part 3, where the first diameter D is greater than the second diameter.

At the same time, the release part 4 cannot move any further towards the main part 3, as the grip-hooks 11 are in contact with the grooved surface 16 provided on the main part 3.

When the device 1 for repair of holes and/or rifts in a net 2 or equivalent shall be utilized to repair a hole in a net 2, a ROV can be utilized for deployment and mounting of the device 1. The ROV will then be equipped with a manipulator arm adapted to bring the device 1 for repair of holes and/or rifts in a net or equivalent from an inactive condition to an active condition, where the ROV, when connected to the device 1, will be maneuvered to an already discovered hole and/or rift in a net, whereupon the manipulator arm will be utilized to guide the release part 4 of the device 1 through the hole or rift in the net 2, the manipulator arm push in the activation element 5, so that the release part 4 is activated, which will cause the grip-hooks 11 to be released from the grooved surface 16 provided on the main part 3. As soon as the grip-hook 11 have been released from the grooved surface 16, the tensioning device 20 will cause that each grip-hook 11 starts to rotate around the fastening- and rotation point P. When the grip-hooks 11, aided by the tensioning device 20, have been brought to its fully released position, the manipulated arm is utilized to pull the release part 4, aided by the activation element 5, back towards the main part 3, thus locking the release part 4 to the main part 3 aided by the locking device 18. When the device 1 for repair of holes and/or rifts in a net or equivalent is in its locked position, the manipulator arm will release and remove the activation element 5 from the device 1, and the ROV will return to the surface.

In order to secure that the device 1 is mounted correctly, one can, after the release part 4 has been guided through the hole or rift in the net 2, perform a visual inspection with the camera attached to the ROV, in order to control that the entire release part 4 has been guided past the net 2, and if the whole release part 4 has not been guided past the hole or rift in the net 2, utilize the manipulator arm to guide the entire release part 4 past the hole or rift, which will secure that the net 2 is correctly placed in relation to release part 4 and main part 3, as well as achieving a complete activation of the device 1, meaning that the grip-hooks 11 can be brough to its fully released position.

After the release part 4 and main part 3 have been interlocked, further visual inspections can be carried out using cameras in order to ensure that the device 1 for repair of holes and/or rifts in a net or equivalent is covering the hole or the rift in the net 2, and also that the device 1 is correctly provided and activated.

A diver equipped with a suitable tool can be deployed when the device 1 for repair of holes and/or rifts in a net or equivalent is to be removed, in which the diver is sent down to the location where the device 1 for repair of holes and/or rifts in a net or equivalent is located, whereupon the diver will insert the tool in the through hole 6 formed in the main part 3. The tool is adapted to push in the projection 18B of the clamp fingers 18A and out of contact with the shoulder 7. The slope of the projection 18B of the clamp fingers 18A will cause the clamp fingers 18A will be pushed inwards towards a center axis running through the through hole 6, the longer the tool is pushed in above the locking device 18, until the clamp fingers 18A have been pushed so far in towards the center axis that the projection 18B of the clamp fingers 18A is brought out of contact with the shoulder 7. When the projection 18B of the clamp fingers 18A is has been brought out of contact with the shoulder 7, the release part 4 will be able to be moved away from the main part 3 once more. The diver will then rotate and push together the grip-hooks 11 to an inactive position, and then withdraw the release part 4 out of the hole or rift of the net 2, whereupon the diver will remove the entire device 1 for repair of holes and/or rifts in a net or equivalent.

The invention is now explained through several non-limiting embodiment examples. A skilled person would be able to understand that one may carry out a plurality of variations and modifications of the device 1 for repair of holes and/or rifts in a net or equivalent as described within the framework of the invention as it is defined in the enclosed claims.

### Referral descriptions and indications

| **Referral descriptions** | **Indication** |
|---|---|
| 1 | Device 1 for repair of holes and/or rifts in a net or equivalent |
| 2 | Net or equivalent |
| 3 | Main part |
| 4 | Release part |
| 5 | Activation element |
| 6 | Through hole in main part |
| 7 | Shoulder |
| 8 | Stem |
| 9 | Head part |
| 10 | Wall element |
| 11 | Grip-hook |
| 12 | Recess, groove, or an equivalent |
| 13 | Through hole grip-hook |
| 14 | Connection device |
| 15 | Radially extending surface |
| 16 | Grooved surface, grip-hook, and main part |
| 17 | Trimming |
| 18 | Locking device |
| 18A | Clamp fingers (control fingers) |
| 18B | Projection clamp fingers |
| 20 | Tensioning device |

## Claims

1. A device (1) for repair of holes and/or rifts in a net, where the device (1) comprises a main part (3) and a release part (4) connected to each other through an activation element (5), where the release part (4) comprises a stem (8) and a head part (9), and the activation element (5) is releasably connected to the stem (8) of the release part (4), **characterized in that** the main main part (3) is formed with a through hole (6), where the through hole (6) over a part of its length is designed with a first diameter (D), and over another part of its length is designed with a second diameter (d), and where a part of the stem (8) is provided in the part of the through hole (6) that is provided in the main part (3) and formed with the second diameter (d).

2. The device (1) according to claim 1, **characterized in that** the first diameter (D) is greater than the second diameter (d), where, in a connection between the first diameter (D) and the second diameter (d), a shoulder (7) is formed.

3. The device (1) according to claim 1, **characterized in that** the head part (9) is designed with a plurality of wall elements (10) provided perpendicularly on each other, where the device further comprises a grip-hook (11) for each wall element (10) where each wall element (10) creates a fastening- and rotation point for the associated grip-hook (11).

4. The device (1) according to claim 3, **characterized in that** each wall element (10) and the grip-hook (11) is designed with a through hole (13), where a connection arrangement (14) is utilized to connect each wall element (10) and the grip-hook (11).

5. The device (1) according to claim 3 or 4, **characterized in that** the grip-hook (11) and the main part (3) over at least a part of its surface is designed with a grooved surface (16).

6. The device (1) according to claim 1, **characterized in that** the release part (4) further comprises a locking arrangement (18), where this locking arrangement (18) in one end is designed with a plurality of clamp fingers (18A).

7. The device (1) according to claim 5, **characterized in that** the grooved surface (16) comes in the form of knobs, cogs, grooves, slots or equivalent.

8. The device (1) according to one or more of the preceding claims, **characterized in that** the device is produced in a plastic material and has a neutral buoyancy.

9. The device (1) according to claim 3, **characterized in that** the activation element (5) further comprises a tensioning device (20) provided and connected between each grip-hook (11) and each wall element (10).

10. A method for repair of holes and/or rifts in a net by means of a ROV wherein the method comprises the following steps:
- equipping a ROV with a manipulator arm,
- mounting a device (1) according to one or more of claims 1-9, for repair of holes and/or rifts in a net or equivalent to the manipulator arm,
- driving the ROV down to an already localized hole and/or rift in the net or equivalent,
- utilizing the manipulator arm to guide a release part (4) of the device (1) through the hole and/or rift in the net, and further a distance past the hole and/or rift in the net
- utilizing the manipulator arm to initially push in an activation element (5) in order to activate the release part (4), and then withdraw the activation element (5) in order to lock the release part (4) in a locked position with a main part of the device (1), and
- withdrawing an actuation element of the device (1).

11. The method according to claim 10, **characterized in that** the method further comprises the following step:
- following the step involving guiding the release part (4) through the hole and/or rift in the net but prior to the step of utilizing the manipulator arm to push in the activation element (5), guiding the release part (4) further a distance past the hole and/or rift.

12. The method according to claim 10, **characterized in that** the method further comprises the following steps:
- readying the device (1) for activation prior to the device (1) being mounted to the manipulator arm.

13. The method according to one or more of the preceding claims 10-12, **characterized in that** the method comprises the following steps:
- carrying out a visual inspection of the device (1) when the release part (4) and the main part (3) are locked in with each other.

14. A method for removal of a utilized device (1) according to one or more of claims 1-9, for repair of holes and/or rifts in a net wherein the method comprises the following steps:
- sending a diver with a suitable tool down to the device (1) to be removed,
- pushing in the tool in a through hole (6) provided in a main part (3) of the device (1),
- folding in a release part (4) to an inactive position,
- withdrawing the release part (4) through and out the hole and/or the rift in the net (2) or equivalent, and
- removing the device (1) from the hole and/or the rift in the net (2) or equivalent.

15. Use of the device (1) according to the preceding claims 1-9 for repair of holes and/or rifts in a net of a fish farming cage.

## Patentansprüche

1. Vorrichtung (1) zum Reparieren von Löchern und/oder Rissen in einem Netz, wobei die Vorrichtung (1) einen Hauptteil (3) und einen Freigabeteil (4) umfasst, die über ein Aktivierungselement (5) miteinander verbunden sind, wobei der Freigabeteil (4) einen Schaft (8) und ein Kopfteil (9) umfasst und das Aktivierungselement (5) lösbar mit dem Schaft (8) des Freigabeteils (4) verbunden ist, **dadurch gekennzeichnet, dass** der Hauptteil (3) mit einem Durchgangsloch (6) gebildet ist, wobei das Durchgangsloch (6) über einen Teil seiner Länge mit einem ersten Durchmesser (D) und über einen anderen Teil seiner Länge mit einem zweiten Durchmesser (d) ausgelegt ist und wobei ein Teil des Schafts (8) in dem Teil des Durchgangslochs (6) bereitgestellt ist, der in dem Hauptteil (3) bereitgestellt und mit dem zweiten Durchmesser (d) gebildet ist.

2. Vorrichtung (1) nach Anspruch 1, **dadurch gekennzeichnet, dass** der erste Durchmesser (D) größer ist als der zweite Durchmesser (d), wobei in einer Verbindung zwischen dem ersten Durchmesser (D) und dem zweiten Durchmesser (d) eine Schulter (7) gebildet ist.

3. Vorrichtung (1) nach Anspruch 1, **dadurch gekennzeichnet, dass** der Kopfteil (9) mit einer Vielzahl von senkrecht zueinander bereitgestellten Wandelementen (10) ausgelegt ist, wobei die Vorrichtung ferner einen Greifhaken (11) für jedes Wandelement (10) umfasst, wobei jedes Wandelement (10) einen Befestigungs- und Drehpunkt für den zugehörigen Greifhaken (11) bildet.

4. Vorrichtung (1) nach Anspruch 3, **dadurch gekennzeichnet, dass** jedes Wandelement (10) und der Greifhaken (11) mit einem Durchgangsloch (13) ausgelegt sind, wobei eine Verbindungsanordnung (14) verwendet wird, um jedes Wandelement (10) und den Greifhaken (11) zu verbinden.

5. Vorrichtung (1) nach Anspruch 3 oder 4, **dadurch gekennzeichnet, dass** der Greifhaken (11) und der Hauptteil (3) über mindestens einen Teil ihrer Oberfläche mit einer gerillten Oberfläche (16) ausgelegt sind.

6. Vorrichtung (1) nach Anspruch 1, **dadurch gekennzeichnet, dass** der Freigabeteil (4) ferner eine Verriegelungsanordnung (18) umfasst, wobei diese Verriegelungsanordnung (18) an einem Ende mit einer Vielzahl von Klemmfingern (18A) ausgelegt ist.

7. Vorrichtung (1) nach Anspruch 5, **dadurch gekennzeichnet, dass** die gerillte Oberfläche (16) in Form von Noppen, Zähnen, Rillen, Schlitzen oder Ähnlichem vorliegt.

8. Vorrichtung (1) nach einem oder mehreren der vorstehenden Ansprüche, **dadurch gekennzeichnet, dass** die Vorrichtung aus einem Kunststoffmaterial hergestellt ist und einen neutralen Auftrieb aufweist.

9. Vorrichtung (1) nach Anspruch 3, **dadurch gekennzeichnet, dass** das Aktivierungselement (5) ferner eine Spannvorrichtung (20) umfasst, die zwischen jedem Greifhaken (11) und jedem Wandelement (10) bereitgestellt und verbunden ist.

10. Verfahren zum Reparieren von Löchern und/oder Rissen in einem Netz mittels eines ROV wobei das Verfahren die folgenden Schritte umfasst:
- Ausstatten eines ROV mit einem Manipulatorarm,
- Anbringen einer Vorrichtung (1) nach einem oder mehreren der Ansprüche 1 bis 9 zum Reparieren von Löchern und/oder Rissen in einem Netz oder dergleichen an dem Manipulatorarm,
- Herunterfahren des ROV zu einem bereits lokalisierten Loch und/oder Riss im Netz oder dergleichen,
- Verwenden des Manipulatorarms zum Führen eines Freigabeteils (4) der Vorrichtung (1) durch das Loch und/oder den Riss in dem Netz und ferner über eine Distanz hinter dem Loch und/oder Riss in dem Netz hinaus
Verwenden des Manipulatorarms zum anfänglichen Eindrücken eines Aktivierungselements (5), um den Freigabeteil (4) zu aktivieren, und anschließendes Zurückziehen des Aktivierungselements (5), um den Freigabeteil (4) in einer verriegelten Position mit einem Hauptteil der Vorrichtung (1) zu verriegeln, und -Zurückziehen eines Betätigungselements der Vorrichtung (1).

11. Verfahren nach Anspruch 10, **dadurch gekennzeichnet, dass** das Verfahren ferner den folgenden Schritt umfasst:
- nach dem Schritt, der das Führen des Freigabeteils (4) durch das Loch und/oder den Riss in dem Netz oder dergleichen involviert, aber vor dem Schritt des Verwendens des Manipulatorarms zum Eindrücken des Aktivierungselements (5), Weiterführen des Freigabeteils (4) um eine Distanz über das Loch und/oder den Riss hinaus.

12. Verfahren nach Anspruch 10, **dadurch gekennzeichnet, dass** das Verfahren ferner die folgenden Schritte umfasst:
- Vorbereiten der Vorrichtung (1) für die Aktivierung, bevor die Vorrichtung (1) an dem Manipulatorarm angebracht wird.

13. Verfahren nach einem oder mehreren der vorstehenden Ansprüche 10 bis 12, **dadurch gekennzeichnet, dass** das Verfahren die folgenden Schritte umfasst:
- Durchführen einer Sichtprüfung der Vorrichtung (1), wenn der Freigabeteil (4) und der Hauptteil (3) miteinander verriegelt sind.

14. Verfahren zum Entfernen einer verwendeten Vorrichtung (1) nach einem oder mehreren der Ansprüche 1 bis 9 zum Reparieren von Löchern und/oder Rissen in einem Netz, wobei das Verfahren die folgenden Schritte umfasst:
- Senden eines Tauchers mit einem geeigneten Werkzeug zu der zu entfernenden Vorrichtung (1),
- Einschieben des Werkzeugs in ein Durchgangsloch (6), das in einem Hauptteil (3) der Vorrichtung (1) bereitgestellt ist,
- Einklappen eines Freigabeteils (4) in eine inaktive Position,
- Herausziehen des Freigabeteils (4) durch das Loch und/oder den Riss in dem Netz (2) oder dergleichen, und
- Entfernen der Vorrichtung (1) aus dem Loch und/oder dem Riss in dem Netz (2) oder dergleichen.

15. Verwendung der Vorrichtung (1) nach den vorstehenden Ansprüchen 1 bis 9 zum Reparieren von Löchern und/oder Rissen in einem Netz eines Fischzuchtkäfigs.

## Revendications

1. Dispositif (1) pour la réparation de trous et/ou de déchirures dans un filet, dans lequel le dispositif (1) comprend une partie principale (3) et une partie de libération (4) reliées l'une à l'autre par un élément d'activation (5), dans lequel la partie de libération (4) comprend une tige (8) et une partie de tête (9), et l'élément d'activation (5) est relié de manière amovible à la tige (8) de la partie de libération (4), **caractérisé en ce que** la partie principale (3) est pourvue d'un trou traversant (6), dans lequel le trou traversant (6) est conçu avec un premier diamètre (D) sur une partie de sa longueur et est conçu avec un second diamètre (d) sur une autre partie de sa longueur, et dans lequel une partie de la tige (8) est disposée dans la partie du trou traversant (6) qui est ménagée dans la partie principale (3) et pourvue du second diamètre (d).

2. Dispositif (1) selon la revendication 1, **caractérisé en ce que** le premier diamètre (D) est plus grand que le second diamètre (d), dans lequel un épaulement (7) est formé dans une liaison entre le premier diamètre (D) et le second diamètre (d).

3. Dispositif (1) selon la revendication 1, **caractérisé en ce que** la partie de tête (9) est conçue avec une pluralité d'éléments de paroi (10) fournis perpendiculairement les uns aux autres, dans lequel le dispositif comprend en outre un crochet de préhension (11) pour chaque élément de paroi (10), dans lequel chaque élément de paroi (10) crée un point de fixation et de rotation pour le crochet de préhension associé (11).

4. Dispositif (1) selon la revendication 3, **caractérisé en ce que** chaque élément de paroi (10) et le crochet de préhension (11) sont conçus avec un trou traversant (13), dans lequel un arrangement de liaison (14) est utilisé pour relier chaque élément de paroi (10) et le crochet de préhension (11).

5. Dispositif (1) selon la revendication 3 ou 4, **caractérisé en ce que** le crochet de préhension (11) et la partie principale (3), sur au moins une partie de leur surface, sont conçus avec une surface rainurée (16).

6. Dispositif (1) selon la revendication 1, **caractérisé en ce que** la partie de libération (4) comprend en outre un dispositif de verrouillage (18), dans lequel ce dispositif de verrouillage (18) est conçu avec une pluralité de doigts de serrage (18A) sur une extrémité.

7. Dispositif (1) selon la revendication 5, **caractérisé en ce que** la surface rainurée (16) se présente sous forme de picots, de dents, de rainures, de fentes ou équivalents.

8. Dispositif (1) selon une ou plusieurs des revendications précédentes, **caractérisé en ce que** le dispositif est produit en matière plastique et présente une flottabilité neutre.

9. Dispositif (1) selon la revendication 3, **caractérisé en ce que** l'élément d'activation (5) comprend en outre un dispositif de serrage (20) disposé et monté entre chaque crochet de préhension (11) et chaque élément de paroi (10).

10. Procédé de réparation de trous et/ou de déchirures dans un filet au moyen d'un ROV dans lequel le procédé comprend les étapes suivantes :
- l'équipement d'un ROV avec un bras manipulateur,
- le montage d'un dispositif (1) selon une ou plusieurs des revendications 1-9, pour la réparation de trous et/ou de déchirures dans un filet ou équivalent sur le bras manipulateur,
- la commande du ROV pour qu'il descende jusqu'à un trou et/ou une déchirure déjà localisés dans le filet ou équivalent,
- l'utilisation du bras manipulateur pour guider une partie de libération (4) du dispositif (1) à travers le trou et/ou la déchirure dans le filet, et plus loin au-delà du trou et/ou de la déchirure dans le filet,
- l'utilisation du bras manipulateur pour d'abord enfoncer un élément d'activation (5) afin d'activer la partie de libération (4), puis retirer l'élément d'activation (5) afin de verrouiller la partie de libération (4) dans une position verrouillée avec une partie principale du dispositif (1), et - le retrait d'un élément d'actionnement du dispositif (1).

11. Procédé selon la revendication 10, **caractérisé en ce que** le procédé comprend en outre l'étape suivante :
- après l'étape impliquant le guidage de la partie de libération (4) à travers le trou et/ou la déchirure du filet ou de l'équivalent, mais avant l'étape d'utilisation du bras manipulateur pour enfoncer l'élément d'activation (5), le guidage de la partie de libération (4) plus loin au-delà du trou et/ou de la déchirure.

12. Procédé selon la revendication 10, **caractérisé en ce que** le procédé comprend en outre les étapes suivantes :
- la préparation du dispositif (1) à l'activation avant que le dispositif (1) ne soit monté sur le bras manipulateur.

13. Procédé selon une ou plusieurs des revendications 10-12 précédentes, **caractérisé en ce que** le procédé comprend les étapes suivantes :
- la réalisation d'une inspection visuelle du dispositif (1) lorsque la partie de libération (4) et la partie principale (3) sont verrouillées l'une par rapport à l'autre.

14. Procédé de retrait d'un dispositif utilisé (1) selon une ou plusieurs des revendications 1-9, pour la réparation de trous et/ou de déchirures dans un filet, dans lequel le procédé comprend les étapes suivantes :
- la descente d'un plongeur équipé d'un outil approprié jusqu'au dispositif (1) à retirer,
- l'introduction de l'outil dans un trou traversant (6) ménagé dans une partie principale (3) du dispositif (1),
- le repliement d'une partie de libération (4) en position inactive,
- l'extraction de la partie de libération (4) à travers et hors du trou et/ou de la déchirure du filet (2) ou de l'équivalent, et
- le retrait du dispositif (1) du trou et/ou de la déchirure dans le filet (2) ou équivalent.

15. Utilisation du dispositif (1) selon les revendications 1-9 précédentes pour la réparation de trous et/ou de déchirures dans un filet d'une cage de pisciculture.
